# EUROPEAN PATENT APPLICATION

(11) **EP 1 029 449 A2**
(43) Date of publication of application: **23.08.2000**
(21) Application number: 00300998.2
(22) Date of filing: 09.02.2000
(51) Int. Cl.: A01K 23/00

(54) **Pet excrement collector**

(30) Priority: 19.02.1999 GB 9916299
(71) Applicant: Abdulatif, Hamza, London SW8 3QU (GB)
(72) Inventor: Abdulatif, Hamza, London SW8 3QU (GB)

(57) **Abstract**

A pets excrement collector characterised by comprising, a circular frame (20), a telescopic handle (2), a draw string plastic bag and a Velcro strap.

The collector is constructed as to be convenient to use either standing up or bending down, carry and store. It is also convenient to use in conjunction with walking sticks or umbrellas.

## Description

This invention relates to dealing effectively with problems caused by dogs fouling streets, pavements, parks etc.

Dogs are the number one pets for many good reasons. However, even legislations have failed thus far to deal with the unacceptable side of owning dogs in built-up areas.

This invention is of a hand tool by which dog's feces are caught in a drawstring disposable plastic bag. The string secures the bag onto frame and closes it afterwards.

The tool can be made from common materials or a combination of these. However, plastic is probably the cheapest and most convenient.

A detailed description of the said tool now follows with reference to the accompanying drawings where:
- FIG.1: shows the tools main parts (1) to (4).
- FIG.2: shows part (1) in more detail.
- FIG.3: shows part (4), the drawstring plastic bag unit in greater detail.
- FIG.4: shows tool assembled for use standing up.
- FIG.5: shows tool assembled for use bending down.
- FIG.6: shows parts (1) and (2) fastened together by part (3).
- FIG.7: shows using a walking stick 28 instead of part (2) the telescopic handle in the standing up and bending down positions.
- FIG.8: shows using an umbrella 29 instead of part (2) the telescopic handle in the standing up and bending down positions.

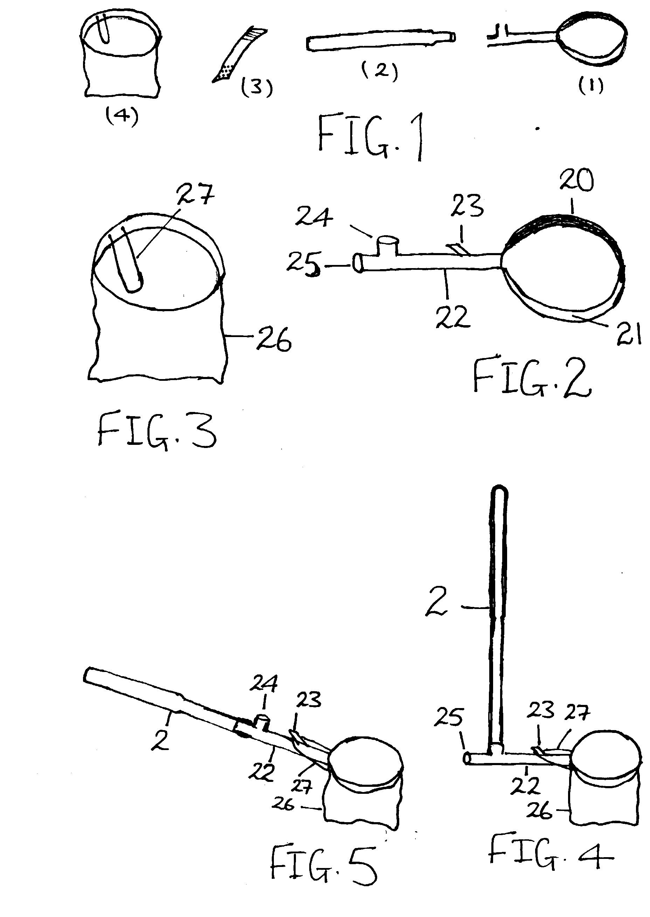

The tool consists of four main parts as shown in FIG.1, part (1) the frame, part (2) the telescopic handle, part (3) the Velcro strap and part (4) the draw string plastic bag unit.

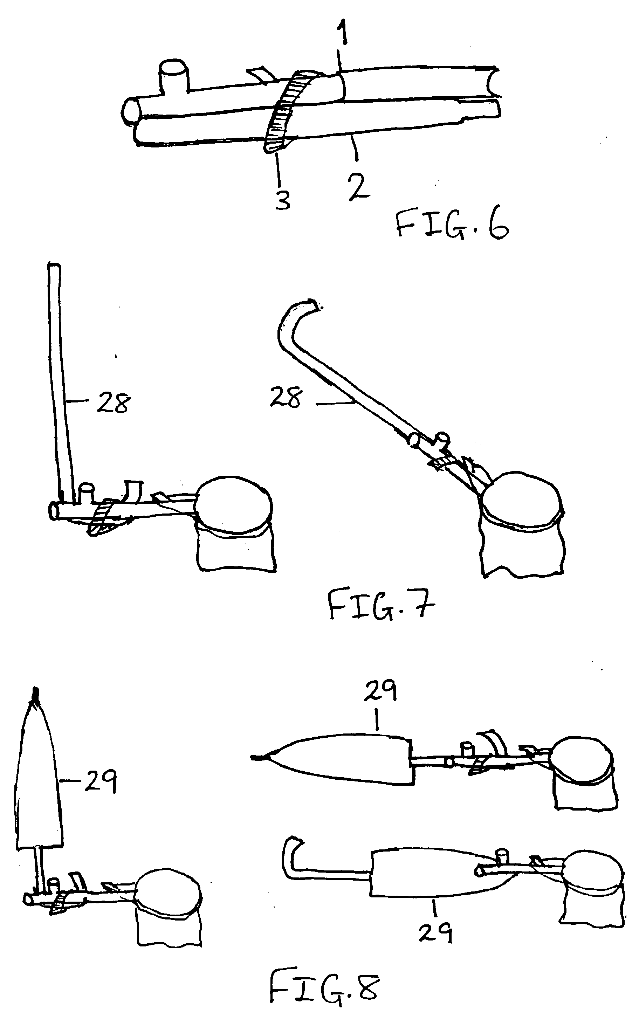

Part (1) as shown in FIG.2 consists of a continuous mould of a circular frame 20 with circular groove 21. Frame 20 runs onto a short tubular handle 22 with string support hook 23 at near end and ending with two shorter tubes of same size and shape 24 and 25. Tube 24 is at right angle to tube 25 and to circular frame 20. Tube 24 supports part (2) the telescopic handle for use in the standing up position as shown in FIG.4 where as tube 25 supports part (2) the telescopic handle for use bending down as shown in FIG.5.
- Part (2): is the telescopic handle.
- Part (3): is the Velcro strap
- Part (4): is the draw string bag unit consisting of bag 26 with string 27. Fastening ends of string 27 fall into bag from inside edge of top opening as shown in FIG.3.

To prepare the tool for use, bag 26 is mounted onto frame 20 by inserting it through loop, folding edges at top opening over frame, pulling ends of draw string 27 and latching onto hook 23. Next, part (2) the telescopic handle is extended and fixed to tube 24 if one wished to use the tool standing up or to tube 25 if one wished to use the tool bending down.

When it is time to use the tool, it is held underneath the dog with one hand and the dog may be held by its lead with the other. When job is done the bag unit is removed by unlatching string 27 from hook 23. In the process of so doing, the bag's weight causes string 27 to draw close the bag which is then disposed off safely via ends of string. Note here that because bag top opening is folded over frame 20, it (the frame) never gets dirty by feces.

Now, for easy carriage and storage, part (2), the telescopic handle is disengaged from tube 24 or tube 25, pushed in, and aligned with part (1) and both parts are secured by part (3) the Velcro strap as FIG.6 shows.

The tool can also be used with a walking stick 28 or an umbrella 29 instead of part (2) the telescopic handle, as shown in FIG.7 and 8. In this case part (3) the Velcro strap is used to fix part (1) to the walking stick or the umbrella. This makes the tool even smaller and easier to carry if one was going to carry the stick or umbrella anyway.

Other designs of the tool may include having a removable right angle joint for fixing part (2) the telescopic handle to instead of fixing it to tube 24 but keeping tube 25 and having a series of string support hooks say two or three instead of just the one 23. Also more than one Velcro strap can be used say two.

## Claims

1. A pet's excrement collector that collects excrement in a disposable draw string plastic bag before it hits the ground.

2. A pet's collector as claimed in claim 1 comprising a frame that supports the draw string plastic bag and a removable telescopic handle.

3. A pet's collector as claimed in claim 2 where the frame is comprising a circular loop with circular groove on its outside edge and a hook at near end of a short tube attached to the loop.

4. A pet's collector as claimed in claim 3 where the circular loop houses the draw string plastic bag by inserting the bag through loop and folding its open end over loop and pulling ends of string and latching on to hook. In this way not only is the bag secure but also the frame is protected by the bag from the excrement.

5. A pet's collector as claimed in claim 3 where the short tube attached to loop ends with two much shorter tubes of same size and shape that support the telescopic handle in two perpendicular directions .

6. A pet's collector as claimed in claim 5 where the telescopic handle is at 180 degree with loop the collector can be used at various angles, but when the telescopic handle is at 90 degree the collector can only be used at 90 degree.

7. A pet's collector as claimed in claim 2 also comprising a Velcro strap.

8. A pet's collector as claimed in claim 7 that is also dismantable, by removing telescopic handle which when pushed in is of same length as that of frame.

9. A pet's collector that is easily carried and stored by removing the telescopic handle, pushing it in, and fastening it to frame with Velcro strap.

10. A pet's collector as claimed in claim 7 where a walking stick or and umbrella could be used instead of the telescopic handle by strapping frame to it with Velcro strap.

11. A pet's collector that is constructed in such a way as to be convenient for use to collect dog's excrement outdoors.
